# DEMANDE DE BREVET EUROPEEN

(11) **EP 1 126 751 A1**
(43) Date de publication de la demande: **22.08.2001**
(21) Numéro de dépôt: 01400215.8
(22) Date de dépôt: 26.01.2001
(51) Int. Cl.: H05H 1/34, B23K 10/00

(54) **Procédé et installation de travail à l'arc plasma avec gaz à teneurs contrôlées en O2 et N2**

(30) Priorité: 18.02.2000 FR 0002022
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR); LA SOUDURE AUTOGENE FRANCAISE, 95310 Saint Ouen L'Aumone (FR)
(72) Inventeur: Augeraud, Regis, 95300 Pontoise (FR); Suzon, Serge, 95300 Pontoise (FR); Delzenne, Michel, 95130 Franconville (FR)
(74) Mandataire: Pittis, Olivier

(57) **Abrégé**

Procédé et installation de travail à l'arc, en particulier de coupage plasma, d'une pièce de travail, dans lequel on alimente une torche à plasma avec un courant électrique et avec un mélange gazeux contenant de l'oxygène et de l'azote, on délivre, au moyen de la torche à plasma, un jet de plasma obtenu par ionisation du mélange gazeux par le courant électrique. La proportion, d'azote ou d'oxygène dans le mélange gazeux est inférieure à 50%. Le mélange gazeux est obtenu par addition d'une quantité déterminée d'azote ou, selon le cas, d'oxygène immédiatement avant introduction du mélange gazeux dans la torche. La quantité d'azote ou d'oxygène est déterminée en fonction de l'épaisseur de la pièce de travail, la nuance du matériau constitutif de la pièce de travail, de la vitesse de travail souhaitée et/ou de l'intensité du courant électrique.

## Description

La présente invention concerne un procédé de travail à l'arc plasma utilisant une torche à plasma alimentée en un mélange de gaz oxydant et d'azote, la quantité d'un gaz par rapport à l'autre dans le mélange gazeux étant déterminée en fonction d'un ou plusieurs paramètres choisis parmi l'épaisseur et/ou la nuance du matériau constitutif de la pièce de travail, de la vitesse de travail souhaitée et de l'intensité du courant électrique.

Une torche à plasma d'arc utilisable dans une opération de coupage, de soudage, de marquage, de projection ou dans toute autre opération de traitement thermique d'un matériau métallique ou non métallique comprend habituellement une électrode en cuivre ou en alliage de cuivre portant un insert cylindrique généralement en hafnium, en tungstène ou en zirconium, sur lequel vient prendre racine l'arc électrique servant à ioniser le gaz alimentant la torche, c'est-à-dire le débit déterminé de gaz sous pression, dit gaz plasmagène, qui est distribué entre l'électrode et la tuyère et qui s'écoule par un orifice de ladite tuyère en direction de la pièce de travail.

L'électrode est généralement centrée au-dessus de cet orifice d'éjection du jet plasma aménagé axialement dans la tuyère et qui forme diaphragme de constriction.

Dans le cas particulier d'une opération de coupage plasma, le dispositif ou système de coupage plasma comprend habituellement une torche à plasma, une source de courant électrique, un système d'allumage d'arc électrique et une ou plusieurs sources de fluides, en particulier de gaz plasmagène, éventuellement de gaz de protection ou de fluide post-injecté, et de fluide de refroidissement de la torche, en général de l'eau distillée.

De telles torches ou installations sont bien connues de l'homme du métier car ayant déjà été décrites dans de nombreux documents auxquels on pourra se reporter pour plus de détails, notamment EP-A-599709, EP-A-872300, EP-A-801882, EP-A-941018, EP-A-144267, EP-A-410875, EP-A-772957, EP-A-902606, EP-A-810052, EP-A-845929, EP-A-790756, EP-A-196612, WO-A-89/11941, US-A-4,521,666, US-A-4,059,743, US-A-4,163,891 et US-A-5,591,357.

De façon connue, le coupage à l'arc plasma exploite les effets thermiques et cinétiques d'un jet plasma pour fondre le matériau à découper et expulser le matériau fondu hors de la saignée formée consécutivement à un déplacement relatif de la torche par rapport à la pièce de travail.

Par ailleurs, il est aussi connu qu'en découpe plasma, le gaz ou le mélange de gaz plasmagène utilisé n'est pas le même suivant la nature du matériau à couper.

Ainsi, un gaz non oxydant, par exemple de l'azote, est généralement utilisé pour les aciers inoxydables ou les alliages légers, alors qu'on préfère utiliser un gaz oxydant, tel l'oxygène ou l'air, pour couper les aciers de construction. Toutefois, dans le cas des aciers de construction, même si l'air comprimé présente l'avantage d'être d'utilisation plus simple que l'oxygène, puisqu'un simple compresseur d'air est suffisant pour alimenter la torche et on évite donc aussi l'approvisionnement en bouteilles de gaz, il se trouve que l'air utilisé en tant que gaz de coupe conduit à obtenir des faces de coupe de moins bonne qualité que celles obtenues avec de l'oxygène, c'est-à-dire engendre la présence de bavures et de striures. L'oxygène est donc habituellement préféré pour cette raison.

Par ailleurs, l'utilisation de mélanges d'azote et d'oxygène dans des proportions d'environ 30% d'azote, en tant que gaz plasmagène, permet d'accroître la vitesse de coupe d'environ 20% par rapport à l'oxygène pur.

De plus, ce même type de mélange azote/oxygène utilisé en double flux permet dans certains cas de diminuer la rugosité des faces de coupes.

Toutefois, ce mélange azote/oxygène est habituellement pré-mélangé, c'est-à-dire fabriqué selon les teneurs choisies, avant d'être conditionné dans des récipients adéquats, telles des bouteilles de gaz, et est ensuite acheminé sur le site d'opération, c'est-à-dire là où doit être réalisé le coupage.

Or, le fait que ce type de mélanges azote/oxygène doivent être pré-mélangés et conditionnés en bouteilles de gaz pose un problème.

En effet, on comprend que, lorsqu'un mélange azote/oxygène doit être utilisé avec des teneurs en azote dans l'oxygène différentes pour répondre à plusieurs applications ou situations de coupage différentes, il est nécessaire de stoker autant de lots de bouteilles que de teneurs désirées, c'est-à-dire que de mélanges azote/oxygène ayant des teneurs différentes en azote.

Cela nécessite donc de disposer d'un parc important de bouteilles de gaz de compositions différentes et adaptées aux différentes situations susceptibles de se présenter et nécessite, de plus, de nombreux mouvements et manipulations de bouteilles.

Dans ces conditions, il est impératif de mettre en place des procédures strictes de stockage et de manutention de chaque bouteille, ainsi qu'un suivi précis des stocks pour éviter toute pénurie en un mélange gazeux particulier, ce qui est lourd à gérer et implique une immobilisation financière et des frais de fonctionnement relativement importants.

Le but de la présente invention est donc de résoudre ces problèmes de stockage et de mouvement de bouteilles tout en facilitant l'utilisation de mélanges d'azote et d'oxygène de teneurs différentes.

En d'autres termes, la présente invention vise à proposer un procédé de travail à l'arc plasma utilisant des mélanges azote/oxygène de teneurs variables compatibles avec différentes situations de travail à l'arc, en particulier différentes situations de coupage de matériaux, tout en conservant ou améliorant les performances de coupe en termes de vitesse, de bavures et/ou de rugosité des faces de coupe et, plus généralement, un procédé de travail à l'arc plasma utilisant des mélanges azote/gaz contenant de l'oxygène.

La présente invention concerne alors un procédé de travail à l'arc plasma d'au moins une pièce de travail en acier de construction, dans lequel
(a) on alimente une torche à plasma avec un courant électrique et avec un mélange gazeux contenant de l'oxygène et de l'azote,
(b) on délivre, au moyen de ladite torche à plasma, un jet de plasma obtenu par ionisation d'au moins une partie dudit mélange gazeux contenant de l'oxygène et de l'azote par ledit courant électrique,
   caractérisé :
   - en ce que la proportion d'azote dans le mélange gazeux contenant de l'oxygène et de l'azote est supérieure à 0% en volume et inférieure à 50% en volume,
   - en ce que ledit mélange gazeux est obtenu par addition d'une quantité déterminée d'azote dans un gaz oxydant contenant de l'oxygène, ladite addition d'azote étant opérée immédiatement avant introduction du mélange gazeux contenant de l'oxygène et de l'azote dans ladite torche, et
   - en ce que la quantité déterminée d'azote est déterminée en fonction d'au moins un paramètre choisi parmi l'épaisseur de la pièce de travail, la nuance de l'acier de construction constitutif de la pièce de travail, de la vitesse de travail souhaitée et de l'intensité du courant électrique.

Les aciers dits "de construction" sont définis par le Comité Européen de Normalisation comme appartenant aux familles des aciers non alliés, faiblement alliés ou fortement alliés répondant aux normes EN 10025, EN 10113-2, EN 10113-3, EN 10137-3 et la suite.

Selon un autre aspect, l'invention concerne aussi un procédé de travail à l'arc plasma d'au moins une pièce de travail en acier inoxydable, dans lequel :
(a) on alimente une torche à plasma avec un courant électrique et avec un mélange gazeux contenant de l'oxygène et de l'azote,
(b) on délivre, au moyen de ladite torche à plasma, un jet de plasma obtenu par ionisation d'au moins une partie dudit mélange gazeux contenant de l'oxygène et de l'azote par ledit courant électrique,
   caractérisé :
   - en ce que la proportion d'oxygène dans le mélange gazeux contenant de l'oxygène et de l'azote est supérieure à 0% en volume et inférieure à 25 % en volume,
   - en ce que ledit mélange gazeux est obtenu par addition d'une quantité déterminée d'oxygène ou d'un gaz oxydant contenant de l'oxygène dans de l'azote, ladite addition d'oxygène étant opérée immédiatement avant introduction du mélange gazeux contenant de l'oxygène et de l'azote dans ladite torche, et
   - en ce que la quantité d'oxygène ou de gaz oxydant contenant de l'oxygène est déterminée en fonction d'au moins un paramètre choisi parmi l'épaisseur de la pièce de travail, la nuance de l'acier inoxydable constitutif de la pièce de travail, de la vitesse de travail souhaitée et de l'intensité du courant électrique.

Un acier dit "inoxydable" appartient, selon le Comité Européen de Normalisation, à la famille des aciers alliés contenant au moins 11% de chrome.

Selon le cas, le procédé de l'invention peut comprendre l'une ou plusieurs des caractéristiques suivantes :
- le procédé de travail à l'arc plasma est un procédé de coupage plasma ou de marquage plasma, de préférence de coupage plasma.
- la nuance du matériau constitutif de la pièce de travail est choisie parmi les aciers de construction et les aciers inoxydables.
- le matériau constituant la pièce de travail comporte ou non un revêtement de surface tel de la peinture, du zinc, de l'aluminium ou autre revêtement de protection.
- le procédé met en oeuvre un mélange de gaz plasmagène adapté ou adaptable au travail à effectuer.
- la proportion d'azote dans le mélange gazeux contenant de l'oxygène et de l'azote est comprise entre 10% en volume et 40% en volume, de préférence comprise entre 20% en volume et 40% en volume pour le travail des aciers de construction.
- la proportion d'oxygène dans le mélange gazeux contenant de l'oxygène et de l'azote est comprise entre 1 % en volume et 22% en volume, de préférence comprise entre 5% en volume et 20% en volume pour le travail des aciers inoxydables.
- le gaz oxydant est de l'oxygène ou de l'air comprimé, éventuellement séché, dépoussiéré et débarrassé des gouttelettes d'huile susceptibles d'être générées par compression, de préférence de l'oxygène.
- l'addition de gaz est réalisée dans au moins un mélangeur de gaz, de préférence ledit mélangeur de gaz comporte des moyens de réglage ou d'ajustage de la teneur en le gaz à ajouter.
- la quantité de gaz à ajouter est déterminée en fonction de l'épaisseur de la pièce de travail et d'au moins un paramètre choisi parmi la nuance du matériau, de la vitesse de travail souhaitée et de l'intensité du courant électrique.
- l'épaisseur de la pièce de travail est comprise entre 0.4 mm et 20 mm, de préférence entre 0.5 et 12 mm.
- la vitesse de travail souhaitée est comprise entre 0.5 et 10 m/min, de préférence entre 1 et 5 m/min.
- l'intensité du courant est comprise entre 10 A et 150 A, de préférence entre 15 et 120 A.

L'invention concerne aussi une installation de travail à l'arc plasma d'au moins une pièce de travail, en particulier susceptible de mettre en oeuvre un procédé selon l'invention, caractérisée en ce qu'elle comporte :
- au moins une torche à plasma fixée sur un bâti-support et déplaçable selon au moins un axe de déplacement,
- au moins un générateur de courant relié à ladite torche,
- au moins une source de gaz oxydant contenant de l'oxygène,
- au moins une source d'azote,
- au moins un mélangeur de gaz alimenté en gaz oxydant contenant de l'oxygène par ladite au moins une source de gaz oxydant et en azote par ladite au moins une source d'azote, ledit mélangeur de gaz comportant des moyens de réglage ou d'ajustage de la proportion d'azote et/ou de gaz oxydant contenant de l'oxygène de manière à obtenir un mélange gazeux contenant de l'oxygène et de l'azote en une proportion d'azote dans ledit mélange gazeux supérieure à 0% en volume et inférieure à 50% en volume ou une proportion d'oxygène dans ledit mélange gazeux supérieure à 0% en volume et inférieure à 25% en volume, la quantité d'azote ou d'oxygène étant déterminée en fonction d'au moins un paramètre choisi parmi l'épaisseur de la pièce de travail, la nuance du matériau constitutif de la pièce de travail, de la vitesse de travail souhaitée et de l'intensité du courant électrique.
- le mélangeur de gaz est agencé entre ladite source de gaz oxydant contenant de l'oxygène, ladite source d'azote et ladite torche.
- des moyens de réglages de débit et/ou de pression de mélange gazeux sont agencés entre la sortie du mélangeur et l'entrée de la torche.

Grâce à la présente invention, il est possible, à partir de gaz purs ou sensiblement purs et de par l'utilisation d'un moyen d'addition et de contrôle soit de la quantité d'azote mélangée au gaz oxydant, tel de l'oxygène ou de l'air comprimé, soit de la quantité de gaz oxydant, tel de l'oxygène ou de l'air comprimé, mélangée à l'azote de garantir, sur une machine de découpe plasma, une teneur de chaque constituant du mélange azote/oxygène contrôlée et adaptée à chaque utilisation ou opération particulière devant être réalisée.

Le contrôle précis de la teneur de chaque constituant selon le type d'application permet d'accroître les performances de découpe plasma selon des critères de productivité et/ou de qualité.

Le réglage automatique de la teneur en azote dans l'oxygène ou de la teneur en oxygène dans l'azote se fait grâce à une commande extérieure en fonction de plusieurs paramètres, tels que l'épaisseur de la tôle, l'intensité du courant, la nuance du matériau à couper et de la vitesse de coupe...

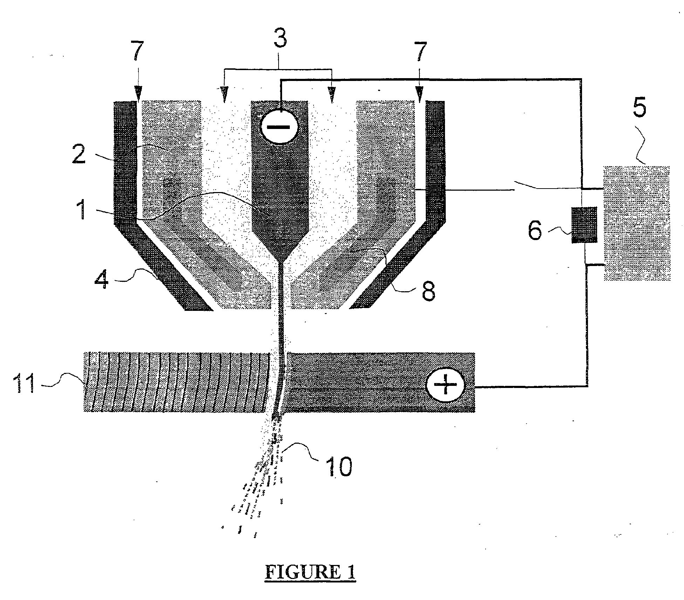

La figure 1 ci-annexée schématise le fonctionnement de la partie active d'une torche à plasma du type double flux représentée durant une opération de coupage d'une tôle 11.

La torche à plasma comprend une électrode 1 où vient prendre racine l'arc électrique servant à ioniser le gaz alimentant la torche, c'est-à-dire le débit déterminé de gaz plasmagène sous pression, qui est distribué et s'écoule dans la chambre plasmagène 3 située entre l'électrode 1 et la tuyère 2. Le jet 10 de plasma est expulsé hors de la chambre plasmagène 3 par un orifice aménagé dans la tuyère 2 et en direction de la tôle 11 à couper. L'électrode 1 est centrée au-dessus de l'orifice d'éjection du jet plasma aménagé axialement dans la tuyère 2 et qui forme diaphragme de constriction.

La torche à plasma est alimentée en courant électrique par une source de courant 5 électrique relié à un système d'allumage 6 d'arc électrique permettant de générer un arc pilote entre la tuyère 2 et l'électrode 1.

On voit aussi sur la figure 1 que la torche est du type double flux, c'est-à-dire qu'elle comporte une seconde tuyère 4 périphérique formant manchon autour de la tuyère 2 et q'un gaz de protection circule dans l'espace 7 inter-tuyères jusqu'à atteindre la zone de l'espace située entre l'extrémité de la tuyère 2 et la surface supérieure de la tôle 11. La tuyère 2 est refroidie par un fluide de refroidissement, telle de l'eau distillée, circulant dans une chambre 8 de refroidissement.

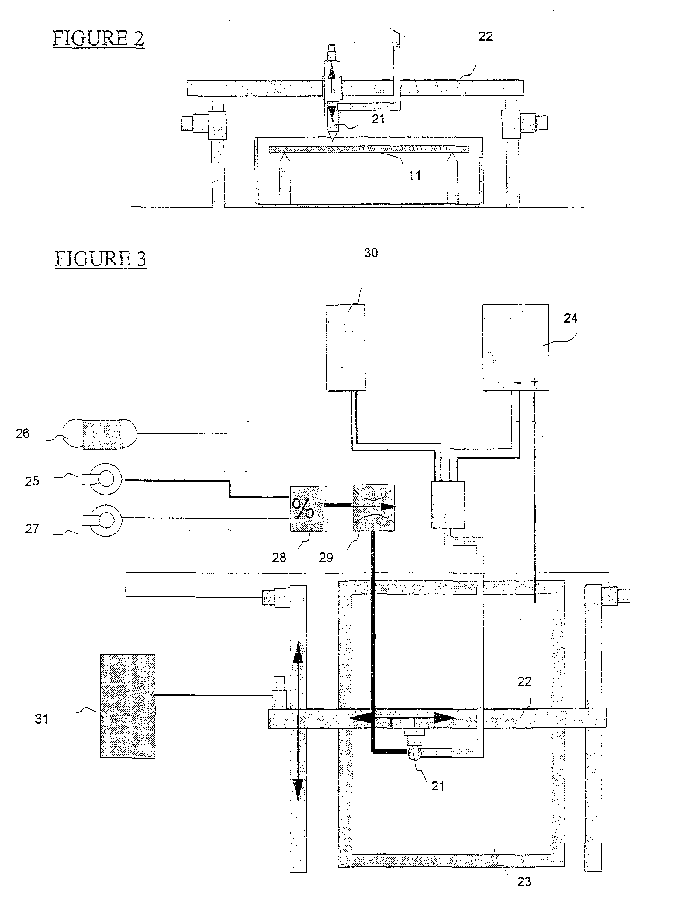

La figure 2 schématise, quant à elle, une installation de coupage plasma, vue de face, comportant schématiquement au moins une torche de coupage plasma 21, fonctionnant comme expliqué ci-dessus et illustré sur la figure 1, fixée à au moins un axe motorisé 22 de déplacement relatif de ladite torche 21 par rapport à la pièce de travail 11, c'est-à-dire la tôle à couper.

Comme visible sur la figure 3, qui est une vue de dessus de l'installation de la figure 2, la torche de coupage plasma 21 est reliée à un générateur 24 de courant;

L'installation comprend aussi des moyens de liaison, de distribution et d'échange d'informations entre ledit générateur 24 de courant, la torche 21 et ledit axe de déplacement.

Une source d'alimentation en gaz oxydant 25, tel de l'oxygène, ou un compresseur d'air comprimé 26, et une source d'alimentation en azote 27 permettent d'alimenter la torche 21 en gaz de coupe.

Entre lesdites sources d'alimentation en gaz 25, 26, 27 et la torche de coupage plasma, est disposé un mélangeur de gaz 28 recevant, d'une part, le gaz oxydant et l'azote et distribuant, d'autre part, vers ladite torche 21, le mélange gazeux plasmagène dans les proportions de mélange requises, c'est-à-dire ayant une teneur en azote ou en oxygène contrôlée selon la présente invention.

Le mélangeur 28 est doté de moyens de réglage de la teneur d'un gaz dans l'autre, par exemple de réglage ou d'ajustage de la teneur en azote.

Des moyens supplémentaires de réglages de débit et/ou de pression 29, par exemple un régulateur de débit massique ou un détendeur, sont préférentiellement intercalés entre la sortie du mélangeur 28 et la torche 21.

Une telle installation peut comprendre en outre des moyens de refroidissement 30 de la torche 21, des moyens de gestion des cycles de travail et des moyens de programmations et de gestion 31 des mouvements dudit au moins un axe de déplacement.

Grâce à une telle installation, la teneur d'un gaz dans l'autre, par exemple de l'azote dans l'oxygène, est réglée de façon à optimiser les performances de la coupe en termes de productivité (accroissement de la vitesse de coupe) et/ou en terme de qualité (diminution des bavures, de la rugosité ou de la dépouille) des faces de coupe.

Ainsi, suivant la nuance de l'acier ou du matériau devant être coupé, et/ou suivant son épaisseur, il sera utilisé de l'oxygène comportant une teneur contrôlée d'azote comprise strictement entre 0 et 50% ou, selon le cas, de l'azote comportant une teneur non-nulle et contrôlée d'oxygène comprise entre 0 et 20%.

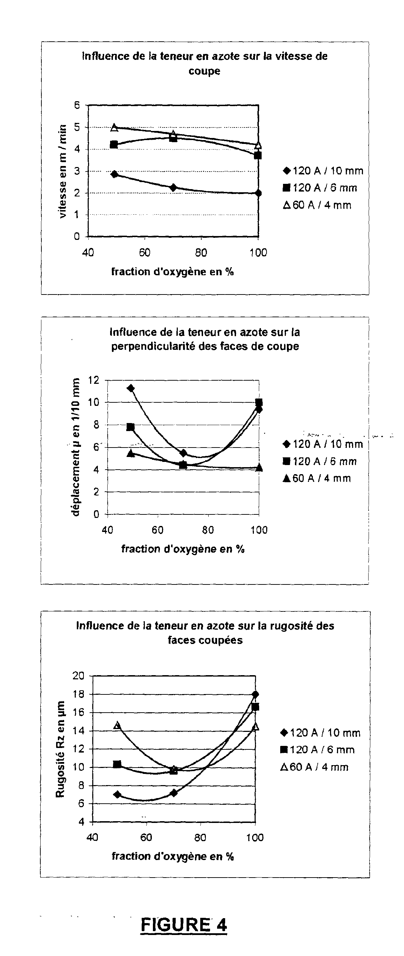

Afin de vérifier l'efficacité du procédé de l'invention, des mesures ont été effectuées suivant la norme DIN 2310 et les résultats sont consignés sur la figure 4.

Une comparaison a été faite en ce qui concerne la vitesse de coupe, la rugosité et l'écart maximal de la face de coupe par rapport à la verticale suivant différents pourcentages de mélange azote/oxygène.

A titre d'exemple, selon la présente invention, un mélange avec 30% d'azote dans l'oxygène permet soit d'accroître la vitesse de coupe sans augmentation de la dépouille, soit de diminuer la dépouille à vitesse constante.

De la même façon, suivant l'épaisseur de la tôle, la présence de l'azote dans l'oxygène permet de diminuer les bavures ou la rugosité des faces coupées.

**Tableau**

| Tôle en | Azote (%) | Oxygène (%) | Intensité (A) | Epaisseur (mm) | Nuance | Vitesse (m/min) |
|---|---|---|---|---|---|---|
| acier inoxydable | | | | | 304 L | |
| | 100 à 80 | 0 à 20 | 15 à 120 | 0 à 20 | 316 L | 1 à 5 |
| acier carbone | 0 à 50 | 100 à 50 | 15 à 120 | 0 à 15 | E24 | 1 à 5 |

Le procédé de découpe plasma selon l'invention, dans lequel un mélangeur permet de réaliser différents types de mélanges avec des teneurs contrôlées à partir de gaz purs ou d'air comprimé peut être utilisé par n'importe quel type d'installation de découpe plasma, qu'elle soit manuelle ou automatique, afin d'optimiser les performances de la découpe en terme de productivité et/ou de qualité suivant la nuance du matériau.

L'invention a été décrite ci-dessus en relation avec une torche de coupage plasma, mais il est bien entendu que l'application de cette invention n'est pas limitée aux seules torches de coupage et qu'elle concerne en tout ou partie les torches de marquage, de soudage, de projection et d'une façon générale toute torche de traitement thermique des matériaux métalliques ou non métalliques.

En outre, l'invention présente les avantages de conduire à une vitesse et une productivité plus élevées lors du coupage des aciers de constructions, et à une qualité de coupe meilleure pour les aciers inoxydables, c'est-à-dire d'obtenir des bords de coupe sensiblement sans bavure ou dépouille.

## Revendications

1. Procédé de travail à l'arc plasma d'au moins une pièce de travail en acier de construction, dans lequel :
(a) on alimente une torche à plasma avec un courant électrique et avec un mélange gazeux contenant de l'oxygène et de l'azote,
(b) on délivre, au moyen de ladite torche à plasma, un jet de plasma obtenu par ionisation d'au moins une partie dudit mélange gazeux contenant de l'oxygène et de l'azote par ledit courant électrique,
caractérisé :
- en ce que la proportion d'azote dans le mélange gazeux contenant de l'oxygène et de l'azote est supérieure à 0% en volume et inférieure à 50% en volume,
- en ce que ledit mélange gazeux est obtenu par addition d'une quantité déterminée d'azote dans un gaz oxydant contenant de l'oxygène, ladite addition d'azote étant opérée immédiatement avant introduction du mélange gazeux contenant de l'oxygène et de l'azote dans ladite torche, et
- en ce que la quantité déterminée d'azote est déterminée en fonction d'au moins un paramètre choisi parmi l'épaisseur de la pièce de travail, la nuance de l'acier de construction constitutif de la pièce de travail, de la vitesse de travail souhaitée et de l'intensité du courant électrique.

2. Procédé de travail à l'arc plasma d'au moins une pièce de travail en acier inoxydable, dans lequel :
(a) on alimente une torche à plasma avec un courant électrique et avec un mélange gazeux contenant de l'oxygène et de l'azote,
(b) on délivre, au moyen de ladite torche à plasma, un jet de plasma obtenu par ionisation d'au moins une partie dudit mélange gazeux contenant de l'oxygène et de l'azote par ledit courant électrique,
caractérisé :
- en ce que la proportion d'oxygène dans le mélange gazeux contenant de l'oxygène et de l'azoté est supérieure à 0% en volume et inférieure à 25 % en volume,
- en ce que ledit mélange gazeux est obtenu par addition d'une quantité déterminée d'oxygène ou d'un gaz oxydant contenant de l'oxygène dans de l'azote, ladite addition d'oxygène étant opérée immédiatement avant introduction du mélange gazeux contenant de l'oxygène et de l'azote dans ladite torche, et
- en ce que la quantité d'oxygène ou de gaz oxydant contenant de l'oxygène est déterminée en fonction d'au moins un paramètre choisi parmi l'épaisseur de la pièce de travail, la nuance de l'acier inoxydable constitutif de la pièce de travail, de la vitesse de travail souhaitée et de l'intensité du courant électrique.

3. Procédé selon l'une des revendications 1 ou 2, caractérisé en ce que le procédé de travail à l'arc plasma est un procédé de coupage plasma ou de marquage plasma, de préférence de coupage plasma.

4. Procédé selon l'une des revendications 1 ou 3, caractérisé en ce que la proportion d'azote dans le mélange gazeux contenant de l'oxygène et de l'azote est comprise entre 10% en volume et 40% en volume, de préférence comprise entre 20% en volume et 40% en volume.

5. Procédé selon l'une des revendications 2 ou 3, caractérisé en ce que la proportion d'oxygène dans le mélange gazeux contenant de l'oxygène et de l'azote est comprise entre 1% en volume et 22% en volume, de préférence comprise entre 5% en volume et 20% en volume.

6. Procédé selon l'une des revendications 1 à 5, caractérisé en ce que le gaz oxydant est de l'oxygène ou de l'air comprimé, éventuellement séché et débarrassé des gouttelettes d'huile susceptibles d'être générées par compression, de préférence de l'oxygène.

7. Procédé selon l'une des revendications 1 à 6, caractérisé en ce que l'addition de gaz est réalisée dans au moins un mélangeur de gaz, de préférence ledit mélangeur de gaz comporte des moyens de réglage ou d'ajustage de la teneur en le gaz à ajouter.

8. Procédé selon l'une des revendications 1 à 7, caractérisé en ce que la quantité de gaz à ajouter est déterminée en fonction de l'épaisseur de la pièce de travail et d'au moins un paramètre choisi parmi la nuance du matériau, de la vitesse de travail souhaitée et de l'intensité du courant électrique.

9. Procédé selon l'une des revendications 1 à 8, caractérisé en ce que l'épaisseur de la pièce de travail est comprise entre 0.4 mm et 20 mm, la vitesse de travail souhaitée est comprise entre 0.5 et 10 m/min, l'intensité du courant est comprise entre 10 A et 150 A, et/ou la nuance du matériau constitutif de la pièce de travail est choisie parmi les aciers inoxydables 304L ou 316L.

10. Installation de travail à l'arc plasma d'au moins une pièce de travail, en particulier susceptible de mettre en oeuvre un procédé selon l'une des revendications 1 à 9, caractérisée en ce qu'elle comporte :
- au moins une torche (21) à plasma fixée sur un bâti-support et déplaçable selon au moins un axe de déplacement,
- au moins un générateur (24) de courant relié à ladite torche (21),
- au moins une source (25,26) de gaz oxydant contenant de l'oxygène,
- au moins une source d'azote (27),
- au moins un mélangeur de gaz (28) alimenté en gaz oxydant contenant de l'oxygène par ladite au moins une source de gaz oxydant (25,26) et en azote par ladite au moins une source d'azote (27), ledit mélangeur de gaz (28) comportant des moyens de réglage ou d'ajustage de la proportion d'azote et/ou de gaz oxydant contenant de l'oxygène de manière à obtenir un mélange gazeux contenant de l'oxygène et de l'azote en une proportion d'azote dans ledit mélange gazeux supérieure à 0% en volume et inférieure à 50% en volume ou une proportion d'oxygène dans ledit mélange gazeux supérieure à 0% en volume et inférieure à 25% en volume, la quantité d'azote ou d'oxygène étant déterminée en fonction d'au moins un paramètre choisi parmi l'épaisseur de la pièce de travail, la nuance du matériau constitutif de la pièce de travail, de la vitesse de travail souhaitée et de l'intensité du courant électrique.
